# EUROPÄISCHE PATENTANMELDUNG

(11) **EP 1 930 572 A2**
(43) Veröffentlichungstag der Anmeldung: **11.06.2008**
(21) Anmeldenummer: 07119178.7
(22) Anmeldetag: 24.10.2007
(51) Int. Cl.: F02D 41/14, F01N 9/00

(54) **Verfahren und Vorrichtung zum Betreiben eines Abgasnachbehandlungssystems**

(30) Priorität: 28.11.2006 DE 102006056100
(71) Anmelder: ROBERT BOSCH GMBH, 70442 Stuttgart (DE)
(72) Erfinder: Post, Christian, 70565, Stuttgart (DE); Christl, Werner, 71696, Moeglingen (DE)

(57) **Zusammenfassung**

Die Erfindung betrifft ein Verfahren zum Betreiben eines Abgasnachbehandlungssystems (40) im Abgaskanal (30) einer Brennkraftmaschine (10) mit zumindest einem Oxidationskatalysator (41) und einem dem Oxidationskatalysator nachgeordneten Partikelfilter (42), wobei eine Regeneration des Partikelfilters durch eine Temperaturerhöhung des Abgases vor dem Partikelfilter durch innermotorische Maßnahmen und/oder durch eine an dem Oxidationskatalysator verbrennende Nacheinspritzung eingeleitet wird und eine Bestimmung der Abgaszusammensetzung vor dem Partikelfilter vorgenommen wird. Dabei ist es vorgesehen, dass eine Regelung der Temperatur des Abgases vor dem Partikelfilter durch Bestimmung und Regelung einer mit der Temperatur des Abgases und/oder einer Änderung der Temperatur des Abgases korrelierenden Abgaszusammensetzung und/oder Änderung der Abgaszusammensetzung erfolgt.

Die Erfindung betrifft weiterhin eine Vorrichtung zur Durchführung des Verfahrens.

Das Verfahren und die Vorrichtung ermöglichen es, eine schnelle und genaue Temperaturregelung des Abgases vor dem Partikelfilter des Abgasnachbehandlungssystems durchzuführen.

## Beschreibung

### Stand der Technik

Die Erfindung betrifft ein Verfahren zum Betreiben eines Abgasnachbehandlungssystems im Abgaskanal einer Brennkraftmaschine mit zumindest einem Oxidationskatalysator und einem dem Oxidationskatalysator nachgeordneten Partikelfilter, wobei eine Regeneration des Partikelfilters durch eine Temperaturerhöhung des Abgases vor dem Partikelfilter durch Luftsystemeingriffe und/oder durch innermotorische Maßnahmen und/oder durch eine an dem Oxidationskatalysator verbrennende Nacheinspritzung eingeleitet wird und eine Bestimmung der Abgaszusammensetzung vor dem Partikelfilter vorgenommen wird.

Die Erfindung betrifft weiterhin eine Vorrichtung zur Regelung der Abgastemperatur vor einem Partikelfilter im Abgaskanal einer Brennkraftmaschine, wobei in Abgasrichtung vor dem Partikelfilter ein Oxidationskatalysator vorgesehen ist, wobei die Abgastemperatur vor dem Oxidationskatalysator durch Luftsystemeingriffe und/oder durch innermotorische Maßnahmen einstellbar ist und wobei die Abgastemperatur nach dem Oxidationskatalysator zusätzlich durch eine an dem Oxidationskatalysator verbrennende Nacheinspritzung von Kraftstoff einstellbar ist.

Insbesondere bei Dieselmotoren werden aufgrund der Anforderungen hinsichtlich niedriger Emissionsgrenzwerte Abgasnachbehandlungssysteme mit Oxidationskatalysatoren und in Abgasrichtung nachgeschalteten Partikelfiltern eingesetzt.

Partikelfilter weisen eine begrenzte Speicherfähigkeit auf und müssen zur Wiederherstellung der Reinigungswirkung in bestimmten Abständen regeneriert werden. Dies geschieht typischerweise alle 250 bis 1000 km. Bei Russpartikelfiltern wird die Regeneration durch eine Erhöhung der Abgastemperatur auf typischerweise 600°C bis 650°C eingeleitet, so dass der in dem Partikelfilter eingelagerte Ruß abzubrennen beginnt. Dies kann durch innermotorische Maßnahmen, zum Beispiel in der Gemischaufbereitung des Motors, oder durch nachmotorische Maßnahmen wie einer an dem Oxidationskatalysator verbrennenden Nacheinspritzung in den Abgaskanal erfolgen. Dadurch wird in dem Partikelfilter eine exotherme Reaktion angestoßen, die einen Abbrand der Russpartikel bewirkt und innerhalb einiger Minuten (z.B. 20 Minuten) den Partikelfilter regeneriert.

Insbesondere für thermisch kritische Filtermaterialien ist darauf zu achten, dass die Temperatur vor dem Partikelfilter sehr genau eingeregelt wird. Dabei ist zu beachten, dass durch den exotherm verlaufenden Partikelabbrand während der Regeneration eine zusätzliche und gegebenenfalls inhomogene Erwärmung des Partikelfilters erfolgt, was zu einer Schädigung des Partikelfilters führen kann.

Heute erfolgt die Temperaturanhebung vor dem Partikelfilter häufig über eine an dem Oxidationskatalysator verbrennende Nacheinspritzung, wobei die Abgastemperatur vor dem Oxidationskatalysator durch motorische Maßnahmen auf eine Temperatur über light off des Oxidationskatalysators angehoben wird. Die Regelung der Temperatur vor dem Oxidationskatalysator und vor dem Partikelfilter erfolgt dabei auf Basis einer jeweiligen Temperaturmessung. Dabei werden die Temperaturregelung vor dem Oxidationskatalysator mit einem inneren Regelkreis und die Temperaturregelung vor dem Partikelfilter in einem äußeren Regelkreis durchgeführt.

Nachteilig bei diesem Verfahren ist, dass die Temperaturregelung über den Oxidationskatalysator mit dem äußeren Regelkreis aufgrund der thermischen Trägheit des Oxidationskatalysators nur sehr langsam ausgelegt werden kann, da eine Temperaturreaktion vor dem Partikelfilter, ausgelöst durch eine späte Nacheinspritzung, abhängig vom Volumenstrom zeitversetzt erfolgt.

Aus der DE 103 33 441 A1 ist ein Verfahren zur Steuerung eines Abgasnachbehandlungssystems, insbesondere eines Partikelfilters, einer Brennkraftmaschine bekannt, wobei ein Sollwert für ein Lambdasignal oder eine Änderung eines Lambdasignals vorgebbar ist und ein Istwert für das Lambdasignal oder für die Änderung des Lambdasignals erfasst wird, und dass, ausgehend von dem Vergleich zwischen dem Stellelement, mit dem die Reaktion im Abgasnachbehandlungssystem steuerbar ist, derart vorgegeben wird, dass sich der Istwert dem Sollwert annähert. Dabei kann es vorgesehen sein, dass er Sollwert derart vorgegeben wird, dass sich eine vorgegebene Temperatur im Abgasbehandlungssystem einstellt.

Durch die Lambda-Steuerung wird die Sauerstoffkonzentration im Abgas auf einen Wert geregelt, der zu einer optimalen Abbrandgeschwindigkeit während der Regeneration des Partikelfilters führt. Hierzu werden die Signale von vor und/oder nach dem Abgasnachbehandlungssystem angeordneten Lambda-Sonden ausgewertet, wobei das Abgasnachbehandlungssystem zumindest einen Partikelfilter aufweist.

Es ist Aufgabe der Erfindung, ein Verfahren zum Betreiben eines Abgasnachbehandlungssystems bereitzustellen, welches eine gezielte Anhebung der Abgastemperatur vor einem Partikelfilter zur Einleitung einer Regenerationsphase des Partikelfilters ermöglicht. Es ist weiterhin Aufgabe der Erfindung, eine entsprechende Vorrichtung bereitzustellen.

### Offenbarung der Erfindung

### Vorteile der Erfindung

Die das Verfahren betreffende Aufgabe der Erfindung wird dadurch gelöst, dass ein Regelung der Temperatur des Abgases vor dem Partikelfilter durch Bestimmung und Regelung einer mit der Temperatur des Abgases und/oder einer Änderung der Temperatur des Abgases korrelierenden Abgaszusammensetzung und/oder Änderung der Abgaszusammensetzung erfolgt. Bekannte Maßnahmen zur Temperaturerhöhung des Abgases im Abgaskanal führen entsprechend der Strömungsgeschwindigkeit des zugehörigen Abgasvolumens unmittelbar zu einer Änderung der Abgaszusammensetzung, unabhängig von der thermischen Trägheit von in dem Abgaskanal verbauten Komponenten und somit deutlich vor einer messbaren Temperaturerhöhung. Eine Regelung auf eine Abgaszusammensetzung oder eine Änderung einer Abgaszusammensetzung kann damit schneller ausgelegt sein als eine Regelung auf ein Temperatursignal. Vorraussetzung zur Regelung auf eine gewünschte Temperatur ist dabei, dass die gemessene Abgaszusammensetzung und/oder die gemessene Änderung der Abgaszusammensetzung einer Temperatur zugeordnet werden kann. Dabei kann das Vorhandensein oder die Konzentration einer oder mehrerer Komponenten des Abgases berücksichtigt werden.

Gemäß einer bevorzugten Ausgestaltungsform der Erfindung ist es vorgesehen, dass bei der Bestimmung der Abgaszusammensetzung der Lambdawert des Abgases bestimmt wird und dass die Regelung der Temperatur des Abgases vor dem Partikelfilter durch eine Regelung auf einen Lambdawert und/oder auf eine Änderung des Lambdawertes erfolgt. Zwischen dem Lambdawert beziehungsweise der Änderung des Lambdawertes und der Abgastemperatur besteht verbrennungstechnisch ein direkter Zusammenhang, so dass aus dem gemessenen Lambdawert auf eine Abgastemperatur geschlossen werden kann. Vorteilhaft ist dabei, dass zur Messung der Lambdawerte auf ohnehin im Abgaskanal vorhandene Lambdasonden zurückgegriffen werden kann. Durch die Messung des Lambdawertes zwischen dem Oxidationskatalysator und dem Partikelfilter kann eine schnelle Regelung der Abgastemperatur über den Oxidationskatalysator und eine in dem Oxidationskatalysator verbrennende Nacheinspritzung erfolgen. Eine schnelle Regelung ist auf Grund der thermischen Trägheit des Oxidationskatalysators auf Basis einer Temperaturmessung zwischen dem Oxidationskatalysator und dem Partikelfilter nicht möglich.

Ist es vorgesehen, dass ein äußerer Regelkreis die Temperatur des Abgases vor dem Partikelfilter regelt und dass der äußere Regelkreis als kaskadierter Regelkreis aufgebaut ist, wobei eine schnelle Temperaturregelung auf Basis der Messung der Abgaszusammensetzung und eine Korrektur dieser Regelung auf Basis einer Temperaturmessung vor oder an dem Partikelfilter erfolgt, so kann auf Basis der schnellen Temperaturregelung eine schwingungsfreie und schnelle Einstellung der Abgastemperatur vor dem Partikelfilter erfolgen, während die langsamer ausgelegte Temperaturregelung auf Basis der Temperaturmessung äußere Einflüsse, wie beispielsweise eine geänderte Außentemperatur, welche von der Bestimmung der Abgaszusammensetzung nicht erfasst werden, korrigieren kann.

Im Rahmen des kaskadierten Regelkreises kann die Korrektur der schnellen Regelschleife mit der Abgaszusammensetzung als Regelgröße durch eine von der gemessenen Temperatur abhängigen Änderung eines Vorgabewertes für die Abgaszusammensetzung und/oder des Lambdawertes und/oder der Änderung der Abgaszusammensetzung und/oder der Änderung des Lambdawertes erfolgen. Es erfolgt somit zunächst eine schnelle Temperatureinstellung vor dem Partikelfilter, welche bei Vorliegen des verzögert auftretenden Temperatursignals präzisiert wird.

Es kann weiterhin vorgesehen sein, dass die Korrektur durch eine Lernfunktion erfolgt, durch welche die in einem Kennlinienfeld hinterlegten Vorgabewerte für die Abgaszusammensetzung und/oder den Lambdawert und/oder die Änderung der Abgaszusammensetzung und/oder die Änderung des Lambdawertes verändert werden. Auf diese Weise können systematische Abweichungen der schnellen Regelschleife oder alterungsbedingte Abweichungen dauerhaft korrigiert werden.

Eine geeignete Korrektur der schnellen Regelschleife sowohl durch Eingriff auf den aktuellen Vorgabewert als auch im Rahmen einer Lernfunktion zur Korrektur des Vorgaben-Kennlinienfeldes ist nur dann möglich, wenn die Temperatur vor dem Partikelfilter ihren durch die temperaturerhöhende Maßnahme bedingten Endwert zumindest weitestgehend erreicht hat. Dies kann dadurch berücksichtigt werden, dass die Korrektur dann erfolgt, wenn die gemessene Temperatur vor dem Partikelfilter einen konstanten Wert einnimmt oder wenn eine Änderungsgeschwindigkeit der Temperatur unter einem vorgegebenen Schwellwert liegt.

Die Temperaturerhöhung vor dem Partikelfilter kann durch eine Kombination aus innermotorischen Maßnahmen, welche zu einer Temperaturerhöhung über die light off Temperatur des Oxidationskatalysators führen, und eine über den Oxidationskatalysator verbrennende Nacheinspritzung erfolgen. Beide Maßnahmen lassen sich dadurch regeln, dass durch einen inneren Regelkreis innermotorische Maßnahmen zur Erhöhung der Abgastemperatur vor dem Oxidationskatalysator gesteuert werden und dass durch den äußeren Regelkreis die an dem Oxidationskatalysator verbrennende Nacheinspritzung gesteuert wird. Da der innere Regelkreis auf eine Temperaturmessung vor dem Oxidationskatalysator zurückgreift, wo keine zeitliche Verzögerung des Temperaturanstiegs auf Grund der thermischen Trägheit des Oxidationskatalysators vorliegt, kann auch dieser Regelkreis sehr schnell ausgelegt werden, ohne dass es zur Schwingungsneigung führt. Zusammen mit dem auf die Messung der Abgaszusammensetzung zurückgreifenden schnellen äußeren Regelkreis kann so eine sehr schnelle und dennoch schwingungsfreie Temperaturregelung der Abgastemperatur vor dem Partikelfilter erfolgen.

Die die Vorrichtung betreffende Aufgabe der Erfindung wird dadurch gelöst dass ein innerer Regelkreis zur Ansteuerung der innermotorischen Maßnahmen zur Abgastemperaturerhöhung vorgesehen ist und dass ein äußerer Regelkreis zur Ansteuerung der an dem Oxidationskatalysator verbrennenden Nacheinspritzung vorgesehen ist und dass dem äußeren Regelkreis als Regelgröße ein Lambda-Signal einer zwischen dem Oxidationskatalysator und dem Partikelfilter angeordneten Lambda-Sonde und ein Temperatursignal eines zwischen dem Oxidationskatalysator und dem Partikelfilter oder an dem Partikelfilter angeordneten Temperatursensors zugeführt ist. Eine Maßnahme zur Temperaturerhöhung des Abgases der Brennkraftmaschine wird sich entsprechend der Geschwindigkeit des Volumenstroms unmittelbar in Form einer Änderung des Lambda-Signals auswirken. Da das Lambda-Signal beziehungsweise eine Änderung des Lambda-Signals unmittelbar mit dem durch die temperaturerhöhende Maßnahme bedingten Temperaturanstieg in Zusammenhang steht, kann aus dem Lambda-Signal auf die zu erwartende Temperaturerhöhung vor dem Partikelfilter geschlossen werden, bevor diese aufgrund der thermischen Trägheit insbesondere des Oxidationskatalysators direkt messbar ist. Durch die Regelung auf das Lambda-Signal kann der äußere Regelkreis somit deutlich schneller ausgelegt werden, als dies durch eine Regelung auf die zeitverzögert auftretende Temperaturerhöhung möglich ist. Die gewünschte Temperaturerhöhung vor dem Partikelfilter, welche durch die innermotorischen Maßnahmen sowie durch die an dem Oxidationskatalysator verbrennende Nacheinspritzung bewirkt wird, lässt sich somit sehr schnell einregeln. Durch die Berücksichtigung der gemessenen, zeitlich verzögerten Temperaturerhöhung vor dem Partikelfilter können Fehler der rein auf der Lambda-Messung basierenden Regelung ausgeglichen werden.

Die Korrektur der schnellen Regelung des äußeren Regelkreises auf Basis der Lambda-Messung kann dadurch ermöglicht werden, dass der äußere Regelkreis als kaskadierter Regelkreis mit einer schnellen Regelung auf einen vorgegebenen Lambdawert und einer Korrektur des vorgegebenen Lambdawertes auf Basis des Temperatursignals des zwischen dem Oxidationskatalysator und dem Partikelfilter oder an dem Partikelfilter angeordneten Temperatursensors aufgebaut ist. Die Korrektur der aktuell eingeregelten Abgastemperatur vor dem Partikelfilter kann dann erfolgen, wenn das Temperatursignal des zeitlich verzögerten Temperaturanstiegs vorliegt.

Gemäß einer bevorzugten Ausführungsform der Erfindung kann es vorgesehen sein, dass die Regelelemente und Vorgabewerte des inneren und des äußeren Regelkreises in einem separaten Steuergerät oder in einer übergeordneten Motorsteuerung hinterlegt sind.

Ist es vorgesehen, dass die Vorgabewerte für die Lambda-Regelung in einem Kennlinienfeld abgelegt sind und dass die Vorgabewerte durch die Temperatursignale des vor oder an dem Partikelfilter angeordneten Temperatursensors korrigierbar sind, so können systematische Fehler oder durch Alterung hervorgerufene Fehler bei der Regelung des äußeren Regelkreises auf Basis der Abgaszusammensetzung durch das Temperatursignal dauerhaft korrigiert werden.

### Kurze Beschreibung der Zeichnungen

Die Erfindung wird im Folgenden anhand eines in den Figuren dargestellten Ausführungsbeispiels näher erläutert. Es zeigen:
- Figur 1: in schematischer Darstellung das technische Umfeld, in dem die Erfindung eingesetzt wird,
- Figur 2: eine zeitliche Darstellung der Signalverläufe,
- Figur 3: einen Signalplan eines kaskadierten äußeren Regelkreises.

### Ausführungsformen der Erfindung

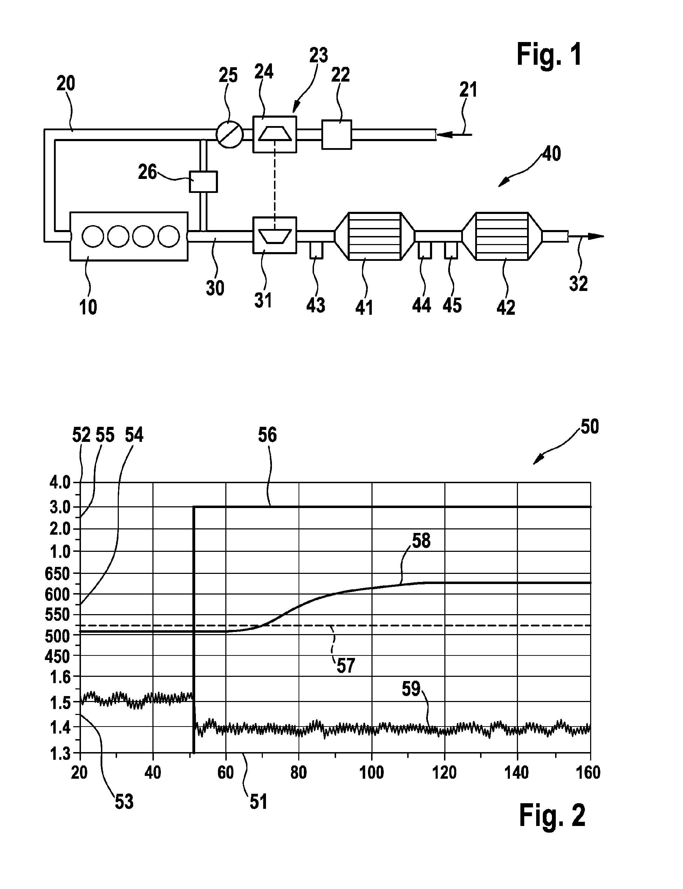

Figur 1 zeigt in schematischer Darstellung das technisch Umfeld, in dem die Erfindung eingesetzt wird. Dargestellt ist eine Brennkraftmaschine 10 in Form eines Dieselmotors mit einem Luftzufuhrkanal 20, in dem ein Zuluftstrom 21 geführt ist, und einem Abgaskanal 30, in dem ein Abgasstrom 32 der Brennkraftmaschine 10 geführt ist. Entlang des Luftzufuhrkanals 20 sind in Strömungsrichtung des Zuluftstroms 21 ein Heißluftfilmmassensensor 22 HFM, eine Kompressionsstufe 24 eines Turboladers 23 und eine Drosselklappe 25 angeordnet. Eine Abgasrückführung 26 verbindet den Luftzufuhrkanal 20 mit dem Abgaskanal 30. In Strömungsrichtung des Abgasstromes 32 sind nach der Brennkraftmaschine 10 eine Abgasturbine 31 des Turboladers 23 sowie als Bestandteile eines Abgasnachbehandlungssystems 40 ein erster Temperatursensor 43, ein Oxidationskatalysator 41 in Form eines Diesel-Oxidationskatalysators, eine Lambda-Sonde 44, ein zweiter Temperatursensor 45 sowie ein Partikelfilter 42 in Form eines Diesel-Partikelfilters dargestellt.

Über den Luftzufuhrkanal 20 wir der Brennkraftmaschine 10 Frischluft zugeführt. Die Frischluft wird dabei von der Kompressionsstufe 24 des Turboladers 23, welche über die Abgasturbine 31 vom Abgasstrom 32 angetrieben wird, komprimiert. Durch die Drosselklappe 25 kann die zugeführte Luftmenge, die von dem Heißluftfilmmassensensor 22 bestimmt wird, eingestellt werden. Zur Schadstoffreduzierung wird dem Zuluftstrom 21 über die Abgasrückführung 26 in von den Betriebsparametern der Brennkraftmaschine 10 abhängigen Mengen Abgas aus dem Abgaskanal 30 zugemischt.

In dem Abgasnachbehandlungssystem 40 werden von der Brennkraftmaschine 10 emittierte Schadstoffe umgesetzt beziehungsweise ausgefiltert. So werden in dem Oxidationskatalysator 41 Kohlenwasserstoffe oxidiert, während der Partikelfilter 42 Rußpartikel zurückhält.

Mit dem vor dem Oxidationskatalysator 41 angeordneten ersten Temperatursensor 43 kann die Abgastemperatur vor dem Oxidationskatalysator 41 bestimmt werden, während mit dem zweiten Temperatursensor 45 die Abgastemperatur vor dem Partikelfilter 42 gemessen wird. Mit der Lambda-Sonde 44 kann der Sauerstoffgehalt des Abgases nach dem Oxidationskatalysator 41 und vor dem Partikelfilter 42 bestimmt werden.

Nicht dargestellt sind für den Betrieb der Brennkraftmaschine 10 und des Abgasnachbehandlungssystems 40 notwendige Steuer- und Regeleinheiten, Einheiten zur Kraftstoffzuführung sowie Einheiten zur Beladungsdiagnose des Partikelfilters 42.

Durch den Betrieb der Brennkraftmaschine füllt sich der Partikelfilter 42, bis das Erreichen seiner Speicherkapazität signalisiert wird. Daraufhin wird eine Regenerationsphase des Partikelfilters 42 angestoßen, bei der die in dem Partikelfilter 42 gespeicherten Partikel in einer exotherm verlaufenden Reaktion verbrannt werden. Um diese exotherme Reaktion einzuleiten sind vor dem Partikelfilter 42 Abgastemperaturen von 600°C bis 650°C notwendig. Da diese Temperaturen bei normalem Betrieb der Brennkraftmaschine 10 nur nahe der Volllast erreicht werden, muss ein Temperaturanstieg durch zusätzliche Maßnahmen bewirkt werden. Insbesondere im Fall niedriger Motorlasten und Drehzahlen sind neben Luftsystemeingriffen, beispielsweise über die Drosselklappe 25, weitere Maßnahmen im Umfeld der Kraftstoffeinspritzung erforderlich. Diese können innermotorische Maßnahmen wie eine Spät-Verschiebung der Haupteinspritzung oder eine in der Brennkraftmaschine 10 drehmomentneutral verbrennende Nacheinspritzung Pol2 sein oder eine in den Abgaskanal 30 vor dem Oxidationskatalysator 41 zugeführte und an dem Oxidationskatalysator 41 verbrennende Nacheinspritzung Pol1.

Zur Einleitung der Regenerationsphase des Partikelfilters 42 ist es bekannt, die Abgastemperatur vor dem Oxidationskatalysator 41 durch innermotorische Maßnahmen und durch Luftsystemeingriffe über die light-off-Temperatur des Oxidationskatalysators 41 von ca. 200°C, zum Beispiel auf eine Zieltemperatur von 500°C, anzuheben. Anschließend wird durch eine an dem Oxidationskatalysator 41 verbrennende Nacheinspritzung die Abgastemperatur vor dem Partikelfilter 42 auf die erforderlichen 600°C bis 650°C gehoben. Die Temperaturregelung erfolgt dabei über die Temperaturmessungen mit dem ersten Temperatursensor 43 vor dem Oxidationskatalysator 41 und dem zweiten Temperatursensor 45 vor dem Partikelfilter 42. Der erste Temperatursensor 43 ist Bestandteil eines nicht dargestellten inneren Regelkreises. Dieser kann schnell ausgelegt werden, da eine Temperaturreaktion als Ist-Temperatur vor dem Oxidationskatalysator 41 schnell erfolgt. Gemäß dem bekannten Verfahren ist der zweite Temperatursensor 45 Bestandteil eines nicht dargestellten äußeren Regelkreises, mit dem der Temperaturanstieg durch die an dem Oxidationskatalysator 41 verbrennende Nacheinspritzung über den Oxidationskatalysator 41 geregelt wird. Durch die große thermische Masse des Oxidationskatalysators 41 erfolgen die Aufheizung und die Abkühlung des Oxidationskatalysators 41 relativ langsam. Entsprechend langsam stellt sich die durch die an dem Oxidationskatalysator 41 verbrennende Nacheinspritzung bewirkte Temperaturerhöhung im Abgas vor dem Partikelfilter 42 ein. Um eine Schwingen des äußeren Regelkreises zu vermeiden, muss dieser entsprechend langsam eingestellt werden, was die Qualität der Temperaturführung vor dem Partikelfilter 42 beeinträchtigt. Dies ist insbesondere bei thermisch kritischen Filtermaterialien problematisch, da es hier schnell zu einer Überhitzung des Partikelfilters 42 kommen kann.

Erfindungsgemäß ist es daher vorgesehen, das Signal der Lambda-Sonde 44 zur Regelung der Temperatur vor dem Partikelfilter 42 zu verwenden. Die Lambda-Sonde 44 gibt an Stelle des zweiten Temperaturfühlers 45 die Regelgröße für den äußeren Regelkreis aus. Dem liegt die Erkenntnis zu Grunde, dass verbrennungstechnisch ein direkter Zusammenhang zwischen dem Lambdawert und der Temperatur besteht, dass also auf Basis einer Lambda-Messung beziehungsweise einer Messung der Änderung von Lambda auf die Temperatur beziehungsweise die Änderung der Temperatur des Abgases vor dem Partikelfilter 42 geschlossen werden kann. Im Gegensatz zu der Temperaturänderung liegt die Reaktion der Lambda-Sonde 44 auf die Nacheinspritzung unmittelbar mit dem Abgasmassenstrom nach dem Umsetzen der Kohlenwasserstoffe in dem Oxidationskatalysator 41 vor. Die Regelung in dem äußeren Regelkreis auf einen Lambdawert kann entsprechend schnell ausgelegt werden, was zu einer schnelleren und besseren Temperaturführung führt.

Der zweite Temperatursensor 45 kann für die Korrektur von Einflüssen wie beispielsweise geänderter Umweltbedingungen verwendet werden. Zu solchen geänderten Umweltbedingungen zählt zum Beispiel eine geänderte Außentemperatur. Dazu kann auf Basis des Temperatursignals des zweiten Temperatursensors 45 ein Lambda-Sollwert aus der Stationärapplikation korrigiert werden.

Weiterhin ist es möglich, dass die Temperaturmessung mit dem zweiten Temperatursensor 45 zusätzlich für eine Lernfunktion des Lambdareglers benutzt wird. Dazu können auf Basis der Temperaturmessung die in einem Kennlinienfeld hinterlegten Vorgabewerte für die Lambdaregelung korrigiert werden, so dass systematische Abweichungen des Regelkreises ausgeglichen werden können.

Figur 2 zeigt eine zeitliche Darstellung der Signalverläufe. In einem Diagramm 50 ist die Abszisse 51 als Zeitskala in Sekundenteilung aufgetragen. Die Ordinate 52 ist in drei Bereiche 53, 54, 55 aufgeteilt, wobei der erste Bereich 53 Lambdawerte, der zweite Bereich 54 Temperaturwerte in Grad Celsius und der dritte Bereich 55 pro Nacheinspritzung dosierte Kraftstoffmengen in mm³/injection angibt. Mit einem Steuersignal Nacheinspritzung 56, welches sich auf den dritten Bereich 55 der Ordinate 52 bezieht, ist mit dem Sprung des Signals der Beginn einer an dem Oxidationskatalysator 41 verbrennenden Nacheinspritzung markiert. Ein Temperaturverlauf 57 des ersten Temperatursensors 43, ein Temperaturverlauf 58 des zweiten Temperatursensors 45 und ein Signal Lambda-Sonde 59 der zwischen dem Oxidationskatalysator 41 und dem Partikelfilter 42 angeordneten Lambda-Sonde 44 sind als Reaktion auf die Nacheinspritzung im zeitlichen Verlauf dargestellt. Während der Temperaturverlauf 57 vor dem Oxidationskatalysator 41 nicht von der Nacheinspritzung verändert wird, reagiert der Temperaturverlauf 58 an dem zweiten Temperatursensor 45 auf die Nacheinspritzung, jedoch mit einer deutlichen zeitlichen Verzögerung gegenüber dem Beginn der Nacheinspritzung. Die Ursache für diese zeitliche Verzögerung liegt in der thermischen Trägheit des Oxidationskatalysators 41, der zunächst selbst aufgeheizt werden muss, bevor die Temperatur des Abgases vor dem Partikelfilter 42 ansteigt. Ein Regelkreis, der auf dieses Temperatursignal zurückgreift, um die Nacheinspritzung zu dosieren, muss entsprechend langsam ausgelegt sein.

Demgegenüber reagiert das Signal Lambda-Sonde 59 unmittelbar auf den Beginn der Nacheinspritzung. Da der Lambdawert beziehungsweise die Änderung des Lambdawertes mit der Temperatur beziehungsweise der Temperaturänderung des Abgases vor dem Partikelfilter 42 korreliert, kann das Signal Lambda-Sonde 59 zur Regelung der Temperaturerhöhung über den Oxidationskatalysator 41 verwendet werden. Der Regelkreis über den Oxidationskatalysator 41 auf Basis des Signals Lambda-Sonde 59 kann entsprechend schnell ausgelegt werden.

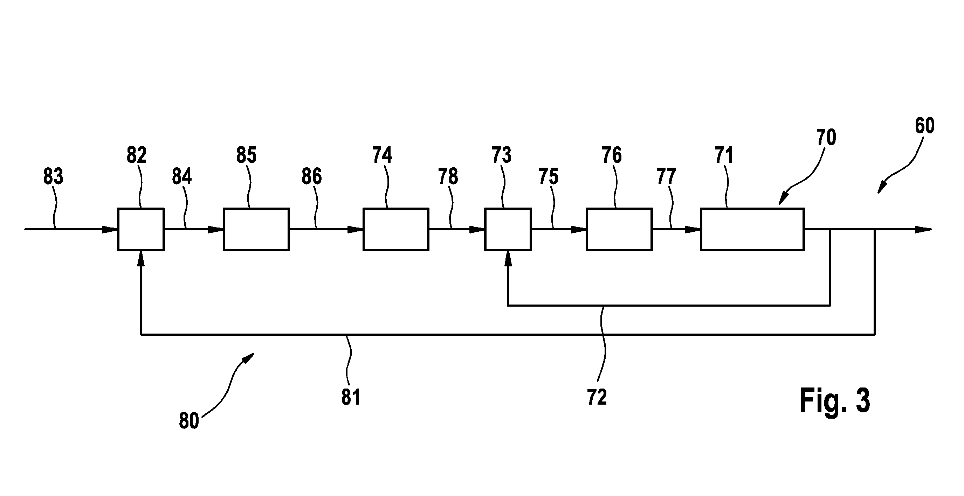

Figur 3 zeigt Signalplan eines kaskadierten äußeren Regelkreises 60, der sich auf das in Figur 1 gezeigte technische Umfeld bezieht. Eine erste Regelschleife 70 ist aus einer Strecke 71, einem ersten PID-Regler 76, einer ersten Vergleichsstelle 73 und einer Lambda-Sollwertvorgabe 74 aufgebaut. Eine zweite Regelschleife 80 beinhaltet zusätzlich eine zweite Vergleichsstelle 82 und einen zweiten PID-Regler 85.

Bezogen auf das in Figur 1 dargestellte Umfeld regelt die erste Regelschleife 70 das Lambda nach der Strecke 71, welche dem in Figur 1 gezeigten Oxidationskatalysator 41 mit der zugehörigen Nacheinspritzung entspricht. Dazu wird ein Lambda-Signal 72 der Lambda-Sonde 44 der ersten Vergleichsstelle 73 zugeführt und dort mit einem Lambda-Sollwert 78, der von der Lambda-Sollwertvorgabe 74 ausgegeben wird, verglichen. Die erste Vergleichsstelle 73 bildet eine erste Regelabweichung 75, die dem ersten PID-Regler 76 zugeführt wird. Dieser bildet die Stellgröße 77.

Das Lambda wird nach dem Oxidationskatalysator 41 gemessen und daraus über den Vergleich mit dem Lambda-Sollwert 78 und der daraus ermittelten Stellgröße 77 die Menge der an dem Oxidationskatalysator 41 verbrennenden Nacheinspritzung geregelt. Da, wie in Figur 2 gezeigt, eine Änderung der Nacheinspritzung sehr schnell von der Lambda-Sonde 44 erfasst wird, kann die erste Regelschleife 70 sehr schnell ausgeführt werden, was über den bekannten Zusammenhang von Lambda und der Temperatur zu einer schnellen und guten Temperaturführung nach dem Oxidationskatalysator 41 und somit vor dem Partikelfilter 42 führt.

In der zweiten Regelschleife 80 wird an der zweiten Vergleichsstelle 82 aus einem von dem in Figur 1 dargestellten zweiten Temperatursensor 45 ermittelten Temperatursignal 81 und einem Temperatur-Sollwert 83 eine zweite Regelabweichung 84 gebildet, die dem zweiten PID-Regler 85 zugeführt wird. Eine von dem zweiten PID-Regler 85 gebildete zweite Stellgröße 86 greift in die Lambda-Sollwertvorgabe 74 der ersten Regelschleife 70 ein. Die zweite Regelschleife 80 ermöglichte es so, über den tatsächlich gemessenen, zeitlich verzögerten Temperaturanstieg vor dem Partikelfilter 42 eine Korrektur der Regelung auf Basis der Lambda-Messung vorzunehmen. Dadurch können Temperaturabweichungen der Lambda-Regelung durch die erste Regelschleife 70, wie sie beispielsweise durch geänderte Umgebungstemperaturen auftreten können, ausgeglichen werden. Die Korrektur kann dann erfolgen, wenn die Temperatur des Abgases vor dem Partikelfilter 42 ausreichend konstant ist. Der kaskadierte äußere Regelkreis 60 ermöglicht es so, über die schnell ausgelegte erste Regelschleife 70 die über den Oxidationskatalysator 41 verbrennende Nacheinsritzung schnell zu Regeln, während über die langsam ausgelegte zweite Regelschleife 80 eine Korrektur der schnellen Regelung der ersten Regelschleife 70 erfolgt.

Der Temperatur-Sollwert 83 ist im Allgemeinen in einem nicht dargestellten Kennlinienfeld abhängig von den Betriebsparametern der Brennkraftmaschine 10 und des Abgasnachbehandlungssystems 40 hinterlegt. In einer nicht dargestellten, auf den kaskadierten äußeren Regelkreis 60 aufbauenden Ausgestaltungsform der Erfindung kann das Temperatursignal 81 bei Abweichungen zwischen der Lambda-Regelung und der Temperaturmessung zur Korrektur des Kennlinienfeldes benutzt werden. So können systematische Abweichungen der Lambda-Regelung dauerhaft korrigiert werden.

## Patentansprüche

1. Verfahren zum Betreiben eines Abgasnachbehandlungssystems (40) im Abgaskanal (30) einer Brennkraftmaschine (10) mit zumindest einem Oxidationskatalysator (41) und einem dem Oxidationskatalysator (41) nachgeordneten Partikelfilter (42), wobei eine Regeneration des Partikelfilters (42) durch eine Temperaturerhöhung des Abgases vor dem Partikelfilter (42) durch Luftsystemeingriffe und/oder durch innermotorische Maßnahmen und/oder durch eine an dem Oxidationskatalysator (41) verbrennende Nacheinspritzung eingeleitet wird und eine Bestimmung der Abgaszusammensetzung vor dem Partikelfilter (42) vorgenommen wird, **dadurch gekennzeichnet, dass** eine Regelung der Temperatur des Abgases vor dem Partikelfilter (42) durch Bestimmung und Regelung einer mit der Temperatur des Abgases und/oder einer Änderung der Temperatur des Abgases korrelierenden Abgaszusammensetzung und/oder Änderung der Abgaszusammensetzung erfolgt.

2. Verfahren nach Anspruch 1, **dadurch gekennzeichnet, dass** bei der Bestimmung der Abgaszusammensetzung der Lambdawert des Abgases bestimmt wird und dass die Regelung der Temperatur des Abgases vor dem Partikelfilter (42) durch eine Regelung auf einen Lambdawert und/oder auf eine Änderung des Lambdawertes erfolgt.

3. Verfahren nach Anspruch 1 oder 2, **dadurch gekennzeichnet, dass** ein äußerer Regelkreis (60) die Temperatur des Abgases vor dem Partikelfilter (42) regelt und dass der äußere Regelkreis (60) als kaskadierter Regelkreis aufgebaut ist, wobei eine schnelle Temperaturregelung auf Basis der Messung der Abgaszusammensetzung und eine Korrektur dieser Regelung auf Basis einer Temperaturmessung vor oder an dem Partikelfilter (42) erfolgt.

4. Verfahren nach Anspruch 3, **dadurch gekennzeichnet, dass** die Korrektur durch eine von der gemessenen Temperatur abhängigen Änderung eines Vorgabewertes für die Abgaszusammensetzung und/oder des Lambdawertes und/oder der Änderung der Abgaszusammensetzung und/oder der Änderung des Lambdawertes erfolgt.

5. Verfahren nach Anspruch 3 oder 4, **dadurch gekennzeichnet, dass** die Korrektur durch eine Lernfunktion erfolgt, durch welche die in einem Kennlinienfeld hinterlegten Vorgabewerte für die Abgaszusammensetzung und/oder den Lambdawert und/oder die Änderung der Abgaszusammensetzung und/oder die Änderung des Lambdawertes verändert werden.

6. Verfahren nach einem der Ansprüche 3 bis 5, **dadurch gekennzeichnet, dass** die Korrektur dann erfolgt, wenn die gemessene Temperatur vor dem Partikelfilter (42) einen konstanten Wert einnimmt oder wenn eine Änderungsgeschwindigkeit der Temperatur unter einem vorgegebenen Schwellwert liegt.

7. Verfahren nach einem der Ansprüche 1 bis 6, **dadurch gekennzeichnet, dass** durch einen inneren Regelkreis innermotorische Maßnahmen zur Erhöhung der Abgastemperatur vor dem Oxidationskatalysator (41) gesteuert werden und dass durch den äußeren Regelkreis (60) die an dem Oxidationskatalysator (41) verbrennende Nacheinspritzung gesteuert wird.

8. Vorrichtung zur Regelung der Abgastemperatur vor einem Partikelfilter (42) im Abgaskanal (30) einer Brennkraftmaschine (10), wobei in Abgasrichtung vor dem Partikelfilter (42) ein Oxidationskatalysator (41) vorgesehen ist, wobei die Abgastemperatur vor dem Oxidationskatalysator (41) durch Luftsystemeingriffe und/oder durch innermotorische Maßnahmen einstellbar ist und wobei die Abgastemperatur nach dem Oxidationskatalysator (41) zusätzlich durch eine an dem Oxidationskatalysator (41) verbrennende Nacheinspritzung von Kraftstoff einstellbar ist, **dadurch gekennzeichnet, dass** ein innerer Regelkreis zur Ansteuerung der innermotorischen Maßnahmen zur Abgastemperaturerhöhung vorgesehen ist und dass ein äußerer Regelkreis (60) zur Ansteuerung der an dem Oxidationskatalysator (41) verbrennenden Nacheinspritzung vorgesehen ist und dass dem äußeren Regelkreis (60) als Regelgröße ein Lambda-Signal (72) einer zwischen dem Oxidationskatalysator (41) und dem Partikelfilter (42) angeordneten Lambda-Sonde (44) und ein Temperatursignal (81) eines zwischen dem Oxidationskatalysator (41) und dem Partikelfilter (42) oder an dem Partikelfilter (42) angeordneten Temperatursensors (45) zugeführt ist.

9. Vorrichtung nach Anspruch 8, **dadurch gekennzeichnet, dass** der äußere Regelkreis (60) als kaskadierter Regelkreis mit einer schnellen Regelung auf einen vorgegebenen Lambdawert und einer Korrektur des vorgegebenen Lambdawertes auf Basis des Temperatursignals (81) des zwischen dem Oxidationskatalysator (41) und dem Partikelfilter (42) oder an dem Partikelfilter (42) angeordneten Temperatursensors (45) aufgebaut ist.

10. Vorrichtung nach Anspruch 8 oder 9, **dadurch gekennzeichnet, dass** die Regelelemente und Vorgabewerte des inneren und des äußeren Regelkreises (60) in einem separaten Steuergerät oder in einer übergeordneten Motorsteuerung hinterlegt sind.

11. Vorrichtung nach einem der Ansprüche 8 bis 10, **dadurch gekennzeichnet, dass** die Vorgabewerte für die Lambda-Regelung in einem Kennlinienfeld abgelegt sind und dass die Vorgabewerte durch die Temperatursignale (81) des vor oder an dem Partikelfilter (42) angeordneten Temperatursensors (45) korrigierbar sind.
